# EUROPÄISCHE PATENTSCHRIFT

(11) **EP 3 657 125 B1**
(45) Veröffentlichungstag und Bekanntmachung des Hinweises auf die Patenterteilung: **22.09.2021**
(21) Anmeldenummer: 20150486.7
(22) Anmeldetag: 24.02.2015
(51) Int. Cl.: G01B 11/30, B21B 38/02

(54) **VORRICHTUNG UND VERFAHREN ZUM ERMITTELN VON PLANHEITSABWEICHUNGEN BEIM BEHANDELN EINES BANDFÖRMIGEN GUTS**
DEVICE AND METHOD FOR DETERMINING VARIATIONS IN FLATNESS WHEN HANDLING A MATERIAL IN THE FORM OF A STRIP
DISPOSITIF ET PROCÉDÉ DE DÉTERMINATION D'ÉCARTS DE PLANÉITÉ LORS DU TRAITEMENT D'UN PRODUIT EN FORME DE BANDE

(30) Priorität: 25.02.2014 DE 102014002454
(43) Veröffentlichungstag der Anmeldung: 27.05.2020
(62) Teilanmeldung aus: 15000528.8
(73) Patentinhaber: VDEh-Betriebsforschungsinstitut GmbH, 40237 Düsseldorf (DE)
(72) Erfinder: KRAMBEER, Hagen, 41363 Jüchen (DE); BRANDENBURGER, Jens, 47839 Krefeld (DE); MÜLLER, Ulrich, 40789 Monheim (DE); SONNENSCHEIN, Detlef, 40822 Mettmann (DE); TACKE, Andreas, 40235 Düsseldorf (DE)
(74) Vertreter: Tilmann, Max Wilhelm

(56) Entgegenhaltungen:
- EP-A1- 2 517 799
- WO-A1-2012/123809
- DE-A1- 19 932 324
- DE-A1-102012 206 212
- JELALI M ET AL: "EINSATZ MODERNER REGELKONZEPTE ZUR BESSEREN NUTZUNG ANLAGENTECHNISCHER POTENTIALE //USE OF ADVANCED CONTROL CONCEPTS FOR BETTER EXPLOITATION OF PRODUCTION PLANT POTENTIALS", STAHL UND EISEN, VERLAG STAHLEISEN, DUSSELDORF, DE, Bd. 122, Nr. 8, 15. August 2002 (2002-08-15), Seiten 35-39, XP001125528, ISSN: 0340-4803

## Beschreibung

Die Erfindung betrifft ein Verfahren und eine Vorrichtung zum Ermitteln von Planheitsabweichungen beim Behandeln eines bandförmigen Guts, insbesondere beim Warmwalzen eines dünnen Metallblechs, beispielsweise eines dünnen Stahlblechs.

Es werden Messrollen beim Kalt- und Warmwalzen von Metallband eingesetzt und sind beispielsweise aus der DE 102 07 501 C1 bekannt. Das Band, beispielsweise Stahlband, wird mit einem gewissen Umschlingungswinkel über eine als Vollrolle ausgestaltete Messrolle geführt. In der Messrolle sind Kraftmessgeber angeordnet, deren Signale ein Messen der Spannungsverteilung über die Bandbreite ermöglichen und dabei Rückschlüsse auf die Planheitsabweichungen zulassen. Bei der Verwendung von bandförmigem Gut, das eine erhöhte Temperatur aufweist, wie beispielsweise beim Warmband, weisen bekannte Messrollen üblicherweise den Nachteil auf, dass sich der Rollenkörper erwärmt und ein Einsatz von als wärmeempfindliche Piezosensoriken ausgestalteten Kraftmessgebern erschwert ist.

EP 1 418 400 A2 offenbart ein Planheits-Messsystem für Metallband, bei dem die Bandplanheit berührungslos gemessen werden kann. Auf der Messoberfläche wird ein Linienmuster erzeugt, das mit einer das Linienmuster auflösenden Kamera erfasst wird. Die von der Kamera erfassten Messdaten können mit einer Referenzmessung verglichen werden, wodurch Rückschlüsse auf die Bandplanheit gezogen werden können. Das Verfahren erfordert die Anordnung eines das Linienmuster erzeugenden Projektors und einer das Linienmuster auflösenden Kamera oberhalb des Bandes. Während die Anordnung unter Laborbedingungen einfach möglich ist, so ist eine Anordnung unter realen Bedingungen in einer Halle, in der das Behandeln eines dünnen bandförmigen Guts erfolgt, meist schwierig. Es sind oft aufwendige Konstruktionen bei der Integration von Messsystemen in Industrieanlagen notwendig, weil das System mindestens zwei Komponenten (Kamera und Projektor) aufweist, deren räumliche Lage jeweils über sechs Parameter festgelegt ist. Der Kalibieraufwand ist erheblich und die Messgenauigkeit kann sich im Laufe der Zeit verschlechtern.

DE 10 2012 206 212 A1 offenbart ein Verfahren zur Bestimmung der Orientierung mindestens einer Fahrzeugschiene eines Messplatzes und eine Vorrichtung zur Durchführung des Verfahrens, bei dem bzw. der eine TOF-Kamera verwendet werden kann, mit der sich die Lage der Fahrschiene im Bezug zum Messwertaufnehmer bestimmen lässt. Mittels einer beweglichen Lagerung einer Beleuchtungseinheit und/oder der TOF-Kamera kann die Orientierung und/oder Ebenheit der Fahrschiene bestimmt werden.

Jelali, M. et al., "Einsatz moderner Regelkonzepte zur besseren Nutzung anlagentechnischer Potentiale", Stahl und Eisen, Verlag Stahleisen, Düsseldorf, Bd. 122, Nr. 8, 15. August 2002, S. 35 bis 39, offenbart ein optisches Planheitsmesssystem namens TopPlan, mittels welchem eine dreidimensionale Höhenverteilung als Basis für abzuleitende Kenngrößen durch eine lückenlose Erfassung der Oberflächenform eines gewalzten Bandes bestimmt werden kann. Es wird ein Streifenmuster auf das Band projiziert und seine Verzerrung von Einzelbildern mit einer Matrixkamera erfasst.

EP 2 517 799 A1 offenbart eine Vorrichtung und ein Verfahren zur industriellen online-Bestimmung einer Mikro-Topographie und Welligkeit von sich bewegenden Gütern, bei der bzw. dem ein Laser und eine Kamera verwendet werden. Es wird ein Bild aufgenommen, bei dem ein Profil der Oberfläche mittels einer Analyse der Deformation einer auf der Oberfläche des Guts unter einem bestimmten Winkel projizierten Laserlinie ermittelt wird.

DE 199 32 324 A1 offenbart ein Verfahren zur Ermittlung der Planheit bzw. der Welligkeit eines bewegten Bandes, bei dem zumindest punkt- und/oder linienweise die Lage einer Oberfläche des Bandes im Raum ermittelt wird, wobei an die Oberfläche zumindest eine virtuelle Auflagefläche anmodelliert wird.

WO 2012/123809 A1 offenbart ein System, ein Verfahren und ein Computerprogramm zum Empfangen eines Lichtstrahls. Es wird eine 3D-Abbildung unter Verwendung eines TOF-Verfahrens beschrieben.

Aufgabe der Erfindung ist es daher, ein vereinfachtes Verfahren und eine vereinfachte Vorrichtung zu schaffen, mit der die Planheitsabweichungen beim Behandeln eines bandförmigen Guts auch unter den gegebenen räumlichen Bedingungen ohne großen Aufwand möglich ist, wobei die Vorrichtung und das Verfahren eine Ermittlung von Planheitsabweichungen auch eines eine hohe Temperatur aufweisenden bandförmigen Guts erlaubt.

Die Aufgabe wird mit dem Gegenstand der unabhängigen Patentansprüche gelöst.

Grundgedanke der Erfindung ist, Planheitsabweichungen des bandförmigen Guts mit einer oder mehreren TOF-Kameras (time of flight camera) zu ermitteln. Das Messprinzip einer TOF-Kamera besteht in der Laufzeitmessung von elektromagnetischen Wellen, beispielsweise Licht, von einem Sender (der Beleuchtungsquelle) zum Messobjekt und vom Messobjekt zu einem PMD-Sensor (photonic mixing device). Eine TOF-Kamera ist regelmäßig aus einem PMD-Sensor, einer Beleuchtungsquelle, einer Optik sowie der Ansteuerungselektronik aufgebaut. Eine solche Kamera wird auch als PMD-Kamera bezeichnet. Die Beleuchtungsquelle kann aus einer (oder mehreren) LEDs, einem (oder mehreren) Lasern oder einer (oder mehreren) ähnlichen Quellen, bevorzugt im nahen Infrarotbereich bestehen. Ein optischer Bandpassfilter vor dem Sensor kann Fremdeinflüsse unterdrücken. Die Auswerteelektronik, die Bestandteil der Bildpunkte des PMD-Sensors ist, kann die Laufzeiten zu den einzelnen Pixeln auswerten. Die Laufzeiten sind direkt proportional zur Distanz und damit kann eine Planheitsabweichung bestimmt werden. Eine TOF-Kamera ermöglicht die Aufnahme einer Matrix mit entsprechend vielen Tiefeninformationen zu einem Zeitpunkt. Es kann die Topographie des betrachteten Bereichs ermittelt werden und aus dieser die Kennwerte für Planheit oder Ebenheit errechnet werden.

Der Begriff TOF-Kamera umfasst erfindungsgemäß einen PMD-Sensor, eine Beleuchtungsquelle bzw. Lichtquelle, eine Optik sowie eine Ansteuerungselektronik. Es kann vorgesehen sein, dass die Beleuchtungsquelle in eine andere Richtung orientiert ist als der PMD-Sensor. PMD-Sensor und Beleuchtungsquelle können in unterschiedlichen Gehäusen oder einem gemeinsamen Gehäuse angeordnet sein. Eine Austrittsöffnung (Austrittspupille) für die Lichtstrahlen der Beleuchtungsquelle und eine Eintrittsöffnung (Eintrittspupille) für die mittels des PMD-Sensors zu erfassenden Lichtstrahlen kann derart vorhanden sein, dass die (Flächen-)Normalen der Eintrittsöffnung und der Austrittsöffnung nicht parallel zueinander verlaufen. Der Winkel zwischen der Normalen der Austrittsöffnung und der Normalen der Eintrittsöffnung kann zwischen 1° bis 90° liegen, vorzugsweise zwischen 5° und 80°, insbesondere bevorzugt zwischen 20° und 60°.

Die erfindungsgemäße Vorrichtung ist zum Ermitteln von Planheitsabweichungen beim Behandeln eines bandförmigen Guts ausgestaltet. Bei dem bandförmigen Gut kann es sich beispielsweise um ein Papier- oder ein Metallband handeln. Das Metall kann Stahl, Alu oder Buntmetall sein. Insbesondere kann die erfindungsgemäße Vorrichtung zum Ermitteln von Planheitsabweichungen beim Warmwalzen eines Stahlbandes eingesetzt werden.

Die Vorrichtung weist eine TOF-Kamera auf, die eine Lichtquelle und eine Auswerteeinheit umfasst. Die TOF-Kamera ist derart über dem bandförmigen Gut anordbar, dass eine Aufnahme eines von der Lichtquelle gepulst beleuchteten Bereichs des Guts mittels der TOF-Kamera quer und/oder längs zur Bewegungsrichtung durchgeführt wird. Die Auswerteeinheit ist derart ausgestaltet, dass aus der Aufnahme eine Planheitsabweichung des bandförmigen Guts ermittelbar ist.

In einer bevorzugten Ausführungsform ist die Auswerteeinheit derart ausgestaltet, dass in Abhängigkeit von der Planheitsabweichung ein Signal erzeugbar ist, das über eine Verbindung mit einer Steuereinheit zum Behandeln des Guts eine Einflussnahme auf das Behandeln des bandförmigen Guts ermöglicht. Hierdurch kann eine Automatisierung bei der Behandlung des bandförmigen Guts ermöglicht werden. Die Auswerteeinheit weist dazu bevorzugt einen Knotenpunkt auf, der mit der Steuereinheit zum Behandeln des Guts verbunden werden kann, wobei an dem Knotenpunkt das Signal zur Einflussnahme anliegen kann.

Für eine möglichst "lückenlose" Erfassung des bandförmigen Guts und damit der Planheitsabweichung des bandförmigen Guts weist eine erfindungsgemäße Vorrichtung eine Synchronisiervorrichtung auf, die derart ausgestaltet ist, das die TOF-Kamera unter Berücksichtigung der Bewegungsgeschwindigkeit des bandförmigen Guts Aufnahmen macht, die eine Aneinanderreihung von Bereichen zur Ermittlung von Planheitsabweichungen des Guts ermöglicht.

In einer Ausführungsform kann eine reflektierende Oberfläche vorhanden sein, die insbesondere diffus reflektiert. In Bezug auf das bandförmige Gut und die TOF-Kamera kann die diffus reflektierende Oberfläche derart ausgerichtet sein, dass die Lichtstrahlen von der Beleuchtungsquelle der TOF-Kamera auf ein hoch spiegelndes bandförmiges Gut treffen, von dem bandförmigen Gut reflektiert werden, und auf die diffus reflektierende Oberfläche treffen. Der Teil des von der diffus reflektierenden Oberfläche reflektierten Lichts, der gemäß Reflexionsgesetz über das hoch spiegelnde bandförmige Gut zurück auf den PMD-Sensor der TOF-Kamera trifft, wird bezüglich der Laufzeit ausgewertet. Für eine Vermessung ist die räumliche Orientierung der reflektierenden Oberfläche zu bestimmen, was durch eine zuvor durchgeführte Kalibrierung erfolgen kann.

Die erfindungsgemäße Vorrichtung bzw. das erfindungsgemäße Verfahren können auch verwendet werden, um eine allgemeine Topographiemessung einer Oberfläche vornehmen zu können. Dazu weist eine Vorrichtung eine TOF-Kamera auf. Die TOF-Kamera ist derart über der Oberfläche anordbar, dass eine Aufnahme eines von der TOF-Kamera erfassten Bereichs aufnehmbar ist.

Unter dem Begriff "Topografiemessung" sind erfindungsgemäß allgemein Messungen der Oberfläche in Form von Formabweichungen, wie beispielsweise die Planheitsabweichung, umfasst. Die Planheitsabweichungen sind ein Qualitätsmaß, um die Topografie von Metallbändern oder allgemein Flachmaterial zu beschreiben. Andere Parameter sind beispielsweise Quer- oder Längsbögen. Auch kann man beispielsweise Wellenlängen und Amplituden von Rand- oder Mittenwellen bestimmen. Bei der Grobblechherstellung oder allgemein bei der Herstellung von Platten werden Parameter ermittelt, die die Ebenheitsabweichungen beschreiben. Als Messergebnis liegt zunächst die Topografie vor und aus dieser können Formparameter, wie auch die Planheitsabweichungen, ermittelt werden.

Die Erfindung wird im Folgenden anhand eines in der Zeichnung dargestellten Ausführungsbeispiels des näheren erläutert.

In der Zeichnung zeigt die
- Fig. 1: eine schematische Darstellung eines Ausführungsbeispiels einer erfindungsgemäßen Vorrichtung über einem bandförmigen Gut,
- Fig. 2: eine schematische Darstellung eines weiteren Ausführungsbeispiels einer erfindungsgemäßen Vorrichtung über einem bandförmigen Gut,
- Fig. 3: eine schematische Darstellung eines weiteren Ausführungsbeispiels und
- Fig. 4: eine schematische Darstellung eines weiteren Ausführungsbeispiels.

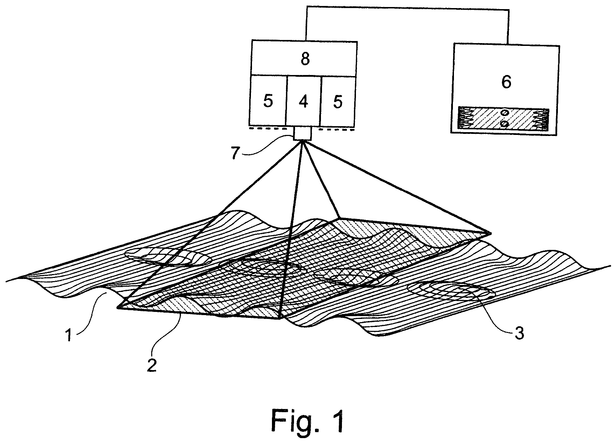

Die Fig. 1 zeigt schematisch ein bandförmiges Gut 1, dessen Planheitsabweichungen ermittelt werden sollen. In dem Ausführungsbeispiel ist eine TOF-Kamera 4 gezeigt, die eine Lichtquelle 5 aufweist. Die TOF-Kamera 4 weist ferner ein Objektiv 7 auf, das einen optischen Bandpassfilter enthalten kann. Eine optional vorgesehene Signalvorverarbeitungseinheit 8 ist in fester relativer Lage zu der TOF-Kamera 4 angeordnet. Die TOF-Kamera 4 weist eine Auswerteeinheit 6 (optional unter Zwischenschaltung der Signalvorverarbeitungseinheit 8) auf, mit der die Topographie, Planheit, Ebenheit, Quer- und Längsbögen des bandförmigen Guts 1 ausgewertet werden können. Mittels der Auswerteeinheit 6 wird die TOF-Kamera 4 erfindungsgemäß zur Geschwindigkeit des bandförmigen Guts 1 synchronisiert, so dass die Auslösung der TOF-Kamera 4 an die Geschwindigkeit des bandförmigen Guts 1 mit geringfügigem oder ohne Überlappungsbereich der Aufnahmen angepasst ist. Außerdem können im Sinne einer Regelung Signale zur Steuerung des Prozesses (zum Beispiel Biegen und Schwenken von Walzen eines Walzengerüsts bei der Behandlung eines Walzbands) erzeugt werden. Die Lichtquelle 5 leuchtet einen Messbereich 2 gepulst aus. Die Laufzeit des Lichtimpulses wird mittels der TOF-Kamera 4 für die Punkte des Messbereichs 2 bestimmt. Die Auflösung des Messbereichs 2 wird durch die Auflösung der TOF-Kamera 4 vorgegeben.

Die Auswerteeinheit 6 verarbeitet die 3D-Daten der TOF-Kamera 4 zu einer Höhenmatrix und weiter beispielsweise zu einer Längungsverteilung (Planheit). Die Topographie des bandförmigen Guts 1 ist zum Beispiel durch Randwellen und Mittelwellen 3 beschreibbar. Innerhalb des betrachteten Messbereichs 2 wird die Topographie vollständig gemessen. Das bandförmige Gut 1 bewegt sich im Messbereich 2 kontinuierlich weiter. Die Messung kann mit hoher Taktrate wiederholt werden, um die Topographie des bandförmigen Guts 1 vollständig erfassen zu können und um Ausreißer eliminieren zu können.

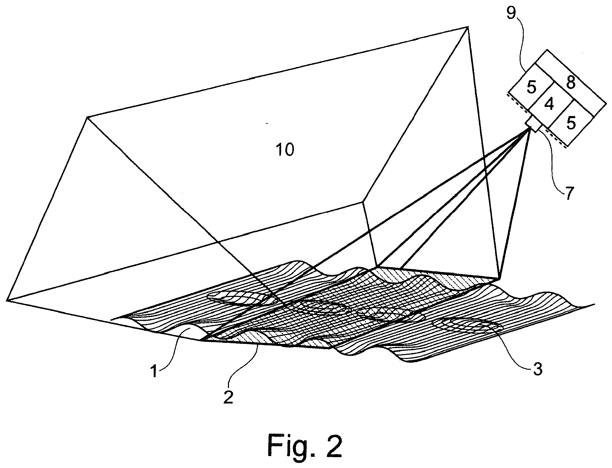

Fig. 2 zeigt eine weitere Ausführungsform einer erfindungsgemäßen Vorrichtung, bei der eine reflektierende Oberfläche 10 vorhanden ist. Die reflektierende Oberfläche 10 ist so über dem bandförmigen Gut 1 angeordnet, dass die Oberfläche 10 die auftreffenden, vom bandförmigen Gut 1 kommenden Lichtstrahlen diffus reflektiert. Die in Fig. 2 dargestellte Ausführungsform ist besonders für hoch spiegelndes bandförmiges Gut 1 geeignet. Im Falle hoch spiegelnder Bleche oder Bänder als bandförmiges Gut 1 würden die von der Lichtquelle 5 ausgesendeten Lichtstrahlen gerichtet von der TOF-Kamera 4 wegreflektiert werden und den Sensor nicht erreichen. Die räumliche Orientierung der reflektierenden Oberfläche 10 zum bandförmigen Gut 1 ist bestimmt worden. Hierzu kann insbesondere vor der Messung eine Kalibrierung durchgeführt werden.

Bei den in Fig. 1 und Fig. 2 dargestellten Ausführungsformen sind der PMD-Sensor der TOF-Kamera 4 und die Lichtquelle 5 auf das bandförmige Gut 1 ausgerichtet.

Bei der Ausführungsform gemäß Fig. 2 werden Lichtstrahlen vom bandförmigen Gut 1 zu der reflektierenden Oberfläche 10, die als die diffus reflektierende Oberfläche ausgestaltet ist, reflektiert. Die Entfernung ist nicht überall gleich, daher trifft das Licht nicht überall gleichzeitig auf die reflektierende Oberfläche 10 auf. Die Reflektionskeule eines auf die reflektierende Oberfläche 10 treffenden Lichtstrahls enthält auch genau die Richtung, die in Kombination mit dem bandförmigen Gut 1 den Weg zurück in die TOF-Kamera 4, und somit den PMD-Sensor, weist. Wären die Lichtquelle 5 und der PMD-Sensor in einem Punkt vereint, dann wären Hin- und Rückweg des Lichts exakt gleich. Ist das spiegelnde bandförmige Gut 1 nicht eben, dann führt dies zu lokalen Laufzeitunterschieden, die mittels der TOF-Kamera 4 ermittelt werden und die Planheit des bandförmigen Guts 1 angeben. Die Topografie des bandförmigen Gut 1 kann aus den mittels der TOF-Kamera 4 aufgenommenen Aufnahmen bzw. Bilder berechnet werden. Die von der TOF-Kamera 4 ermittelten Laufzeiten der einzelnen Pixel des PMD-Sensors entsprechen den örtlichen Neigungen der zu vermessenden Oberfläche des bandförmigen Guts 1. An der diffus reflektierenden Oberfläche 10 wird das ausgesendete Licht der Lichtquelle 5 auch in die gleiche Richtung zurückreflektiert und gelangt so wiederum über das bandförmige Gut 1 (Messobjekt) zum PMD-Sensor der TOF-Kamera 4.

Hieraus kann die Planheitsabweichung ermittelt werden. Es kann vorgesehen sein, dass andere Formparameter des bandförmigen Guts über eine Integration der lokalen Neigungen zur Höhenmatrix (Topografie) durchgeführt werden.

In Fig. 2 ist schematisch gezeigt, dass die TOF-Kamera 4 zusammen mit der Signalvorverarbeitungseinheit 8 eine Einheit 9 ausbilden kann. Die Einheit 9 kann auch in der Ausführungsform der Fig. 1 verwendet werden.

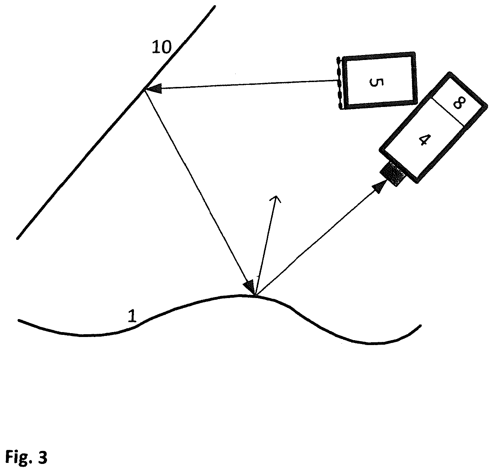

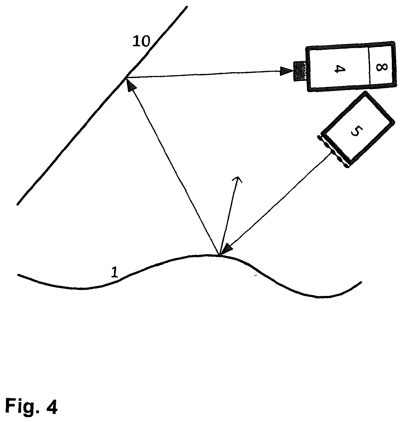

Fig. 3 und 4 zeigen weitere schematische Ausführungsbeispiele, bei denen die Lichtquelle 5 und der PMD-Sensor der TOF-Kamera 4 unterschiedlich ausgerichtet sind.

Bei dem Ausführungsbeispiel der Fig. 3 ist der PMD-Sensor auf das bandförmige Gut 1 ausgerichtet. Die Lichtquelle 5 ist auf die diffus reflektierende Oberfläche 10 ausgerichtet. Das von der Lichtquelle 5 ausgesendete Licht wird über die Oberfläche 10 zum hoch spiegelnden bandförmigen Gut 1 reflektiert und auch in die Richtung zum PMD-Sensor der TOF-Kamera 4 reflektiert.

Bei dem Ausführungsbeispiel der Fig. 4 ist die Lichtquelle 5 auf das bandförmige Gut 1 ausgerichtet. Der PMD-Sensor der TOF-Kamera 4 ist auf die diffus reflektierende Oberfläche 10 ausgerichtet. Das von der Lichtquelle 5 ausgesendete Licht wird über das hoch spiegelnde bandförmige Gut 1 zur diffus reflektierenden Oberfläche 10 reflektiert. Die Lichtstrahlen werden anschließend zum PMD-Sensor der TOF-Kamera 4 empfangen.

## Patentansprüche

1. Vorrichtung zum Ermitteln von Planheitsabweichungen eines sich in einem Messbereich kontinuierlich weiter bewegenden Guts beim Behandeln des bandförmigen Guts (1), insbesondere beim Warmwalzen eines Stahlbands, wobei die Vorrichtung eine TOF-Kamera (4) umfasst und die TOF-Kamera (4) derart über dem bandförmigen Gut (1) angeordnet ist, dass eine Aufnahme eines Bereichs des Guts mittels der TOF-Kamera (4) quer und/oder längs zur Bewegungsrichtung aufnehmbar ist und die TOF-Kamera (4) eine Auswerteeinheit (6) aufweist, die derart ausgestaltet ist, dass aus der Aufnahme eine Planheitsabweichung ermittelbar ist, wobei die Vorrichtung eine Synchronisiervorrichtung aufweist, die derart ausgestaltet ist, dass die TOF-Kamera (4) unter Berücksichtigung der Bewegungsgeschwindigkeit des bandförmigen Guts (1) Aufnahmen macht, die eine Aneinanderreihung von Bereichen zur Ermittlung von Planheitsabweichungen des Guts ermöglicht.

2. Vorrichtung nach Anspruch 1, wobei eine Auswerteeinheit (6) der TOF-Kamera derart ausgestaltet ist, dass in Abhängigkeit von der Planheitsabweichung ein Signal erzeugbar ist, das über eine Verbindung mit einer Steuereinheit zum Behandeln des Guts eine Einflussnahme auf das Behandeln des bandförmigen Guts (1) ermöglicht.

3. Vorrichtung nach einem der vorhergehenden Ansprüche, wobei die TOF-Kamera (4) eine Lichtquelle (5) umfasst und eine reflektierende Oberfläche (10) vorhanden ist, die in Bezug auf das bandförmige Gut (1) und die TOF-Kamera (4) derart ausgerichtet ist, das von dem bandförmigen Gut (1) reflektierte Lichtstrahlen der Lichtquelle (5), die auf die reflektierende Oberfläche (10) treffen, in Richtung der TOF-Kamera (4) reflektiert werden.

4. Verfahren zum Ermitteln von Planheitsabweichungen eines sich in einem Messbereich kontinuierlich weiter bewegenden bandförmigen Guts (1) beim Behandeln des bandförmigen Guts (1), insbesondere beim Warmwalzen eines Stahlbands, wobei von einem Bereich des Guts mittels einer über dem bandförmigen Gut (1) angeordneten TOF-Kamera (4) quer und/oder längs zur Bewegungsrichtung des Guts eine Aufnahme gemacht wird und aus der Aufnahme eine Planheitsabweichung ermittelt wird, wobei ein Auslösen der TOF-Kamera (4) für eine Aufnahme derart synchronisiert wird, dass eine Aneinanderreihung von Bereichen zur Ermittlung von Planheitsabweichungen ermittelt wird.

5. Verfahren nach Anspruch 4, wobei die Planheitsabweichungen angezeigt und/oder eine Einflussnahme auf das Behandeln des Guts (1) durchgeführt wird.

6. Verfahren nach einem der Ansprüche 4 oder 5, wobei Bereiche mittels der TOF-Kamera (4) aufgenommen werden, die sich zumindest teilweise überlappen.

7. Verfahren nach einem der Ansprüche 4 bis 6, wobei eine Kalibrierung der TOF-Kamera (4) vor einem Anordnen der TOF-Kamera über dem bandförmigen Gut durchgeführt wird.

8. Verfahren nach einem der vorhergehenden Ansprüche, wobei eine reflektierende Oberfläche (10) vorhanden ist, die in Bezug auf das bandförmige Gut (1) und die TOF-Kamera (4), die eine Lichtquelle (5) umfasst, derart ausgerichtet ist, dass von dem bandförmigen Gut (1) reflektierte Lichtstrahlen der Lichtquelle (5), die auf die reflektierende Oberfläche (10) treffen, in Richtung der TOF-Kamera (4) reflektiert werden und die Laufzeit gemessen wird.

## Claims

1. Device to determine flatness deviations in a continuously moving material in a measurement region during the treatment of the strip-shaped material (1), particularly during the hot-rolling of a steel strip, wherein the device comprises a TOF camera (4) and the TOF camera (4) is arranged over the strip-shaped material (1) such that a recording of an area of the material by the TOF camera (4) can be made transversely and/or along the movement direction and the TOF camera (4) has an evaluation unit (6) which is designed to determine a flatness deviation from the recording wherein the device has a synchronising device which is designed such that the TOF camera (4), taking into account the speed of movement of the strip-shaped material (1), makes recordings which enable a stringing together of areas to determine flatness deviations in the material.

2. Device according to claim 1, wherein an evaluation unit (6) of the TOF camera is designed such that, depending on the flatness deviation, a signal can be created which, via a connection with a control unit to deal with the commodity, makes it possible to deal with the strip-shaped material (1).

3. Device according to any one of the preceding claims, wherein the TOF camera (4) comprises a light source (5) and a reflecting surface (10) is present which is oriented in relation to the strip-shaped material (1) and the TOF camera (4) such that light rays reflected by the strip-shaped material (1) from the light source (5) meeting at the reflecting surface (10) are reflected towards the TOF camera (4).

4. Method to determine flatness deviations in a continuously moving strip-shaped material (1) in a measurement region during the treatment of the strip-shaped material (1), particularly during the hot-rolling of a steel strip, wherein a recording is made of an area of the material by means of a TOF camera (4) arranged over the strip-shaped material (1) arranged transversely and/or along the movement direction of the material and a flatness deviation is determined from the recording wherein triggering of the TOF camera (4) is synchronised for a recording so that areas are strung together to determine flatness deviations.

5. Method according to claim 4, wherein the flatness deviations are displayed and/or an influence is exerted over the treatment of the material (1).

6. Method according to either one of claims 4 or 5, wherein areas are recorded by means of the TOF camera (4) which at least partly overlap.

7. Method according to any one of claims 4 to 6, wherein the TOF camera (4) is calibrated before arranging the TOF camera over the strip-shaped material.

8. Method according to any one of the preceding claims, wherein a reflecting surface (10) is present which is adjusted in relation to the strip-shaped material(1) and the TOF camera (4), which comprises a light source (5), such that light beams from the light source (5), which are reflected on to the reflecting surface (10) from the strip-shaped material (1) are reflected towards the TOF camera (4) and the duration is measured.

## Revendications

1. Dispositif pour déterminer des divergences de planéité d'un matériau en perpétuel mouvement dans une plage de mesure lors du traitement du matériau en forme de bande (1), notamment lors du laminage à chaud d'une bande en acier, le dispositif comprenant une caméra temps de vol (4) et la caméra temps de vol (4) étant disposée sur le matériau en forme de bande (1) de telle sorte qu'une prise d'une zone du matériau au moyen de la caméra temps de vol (4) peut être enregistrée transversalement et/ou longitudinalement à la direction du mouvement et la caméra temps de vol (4) présentant une unité d'évaluation (6), qui est conçue de telle manière qu'une divergence de planéité est déterminable à partir de la prise, le dispositif présentant un dispositif de synchronisation, qui est conçu de telle manière que la caméra temps de vol (4) fait une prise en prenant en compte la vitesse de mouvement du matériau en forme de bande (1), prise qui permet la juxtaposition de zones afin de déterminer des divergences de planéité du matériau.

2. Dispositif selon la revendication 1, dans lequel une unité d'évaluation (6) de la caméra temps de vol est conçue de telle manière qu'un signal peut être généré en fonction de la divergence de planéité, signal qui permet une influence sur le traitement du matériau en forme de bande (1) via une connexion à une unité de commande pour le traitement du matériau.

3. Dispositif selon l'une des revendications précédentes, dans lequel la caméra temps de vol (4) comprend une source lumineuse (5) et une surface réfléchissante (10) est présente, qui est positionnée par rapport au matériau en forme de bande (1) et à la caméra temps de vol (4) de telle manière que les rayons lumineux réfléchis par le matériau en forme de bande (1) de la source lumineuse (5), qui touchent la surface réfléchissante (10), sont réfléchis dans la direction de la caméra temps de vol (4).

4. Procédé pour déterminer des divergences de planéité d'un matériau en forme de bande (1) en perpétuel mouvement dans une plage de mesure lors du traitement du matériau en forme de bande (1), notamment lors du laminage à chaud d'une bande en acier, une prise étant faite d'une zone du matériau au moyen d'une caméra temps de vol (4) disposée sur le matériau en forme de bande (1) transversalement et/ou longitudinalement à la direction du mouvement du matériau et une divergence de planéité étant déterminée à partir de la prise, un déclenchement de la caméra temps de vol (4) étant synchronisé pour une prise de telle manière qu'une juxtaposition de zones afin de déterminer des divergences de planéité est déterminée.

5. Procédé selon la revendication 4, dans lequel les divergences de planéité sont affichées et/ou une influence est effectuée sur le traitement du matériau (1).

6. Procédé selon l'une des revendications 4 ou 5, dans lequel des zones sont enregistrés au moyen de la caméra temps de vol (4), zones se chevauchant au moins partiellement.

7. Procédé selon l'une des revendications 4 à 6, dans lequel un calibrage de la caméra temps de vol (4) est effectué avant un positionnement de la caméra temps de vol sur le matériau en forme de bande.

8. Procédé selon l'une des revendications précédentes, dans lequel une surface réfléchissante (10) est présente, qui est positionnée par rapport au matériau en forme de bande (1) et à la caméra temps de vol (4), qui comprend une source lumineuse (5), de telle manière que les rayons lumineux réfléchis par le matériau en forme de bande (1) de la source lumineuse (5), qui touchent la surface réfléchissante (10), sont réfléchis dans la direction de la caméra temps de vol (4) et la durée est mesurée.
